# EUROPEAN PATENT SPECIFICATION

(11) **EP 3 744 990 B1**
(45) Date of publication and mention of the grant of the patent: **10.05.2023**
(21) Application number: 20176261.4
(22) Date of filing: 25.05.2020
(51) Int. Cl.: F16B 37/08, E03C 1/04

(54) **FASTENING DEVICE AND A SANITARY FITTING COMPRISING THE FASTENING DEVICE**
BEFESTIGUNGSVORRICHTUNG UND SANITÄRARMATUR MIT SOLCH EINER BEFESTIGUNGSVORRICHTUNG
DISPOSITIF DE FIXATION ET ROBINETTERIE SANITAIRE COMPRENANT LE DISPOSITIF DE FIXATION

(30) Priority: 27.05.2019 DE 102019114077
(43) Date of publication of application: 02.12.2020
(73) Proprietor: ORAS OY, 26100 Rauma (FI)
(72) Inventor: Buchner, Marcus, 71067 Sindelfingen (DE)
(74) Representative: Ostertag & Partner Patentanwälte mbB

(56) References cited:
- EP-A1- 3 284 961
- DE-A1-102010 006 375
- US-A- 5 906 401

## Description

### BACKGROUND OF THE INVENTION

### 1. Field of the Invention

The present invention relates to a fastening device for fastening a sanitary fitting to a mounting object and a sanitary fitting comprising the fastening device.

### 2. Description of the Prior Art

Sanitary fittings used to dispense water are commonly mounted to a mounting object, such as a sink or a countertop, by means of a stud pre-attached to the sanitary fitting. In many cases, the stud is hollow to allow wiring for electrical components and/or water feed lines to pass through the stud.

The stud is fed through an opening in the mounting object from one side of the mounting object. On the opposite side of the mounting object a seal, a washer and a nut are usually placed on the stud. The nut is screwed onto the stud until the seal reaches the surface of the mounting object and the sanitary fitting is securely fastened to the mounting object.

In most cases, the procedure of screwing the nut onto the stud of the sanitary fitting is tedious and time-consuming. This is disadvantageous, as the conditions under which a person mounts the sanitary fitting are difficult as it is, since the person is typically required to crouch low in order to reach underneath the mounting surface to access the stud. This can lead to discomfort since the time spent in this position is rather long due to the aforementioned tedious screwing procedure, making it therefore desirable to alleviate this screwing procedure.

EP 3 284 961 A1 discloses a sanitary fitting comprising a fastening device for fastening the sanitary fitting to a mounting through-hole, the fastening comprising a retaining element and a securing nut to press the retaining element against the mounting object. The securing nut comprises a throughhole comprising a sliding passage with a first axis and a screw thread passage with a second axis, both axes having a certain distance from one another. When being mounted, the retaining element is pushed against the mounting object by the securing nut which is moved on the fastening rod in the sliding position. Finally, the nut is displaced into the screw thread position and may be fastened by rotating. The difficulty is, however, that the retaining element tends to fall down until the securing screw is put beneath.

### SUMMARY OF THE INVENTION

It is therefore an object of the present invention to provide a fastening device for fastening a sanitary fitting to an object which makes the process of fastening the sanitary fitting to the mounting object easier.

This object is achieved by a fastening device for fastening a sanitary fitting to a mounting object according to claim 1.

The fastening device comprises a nut having a screw threading portion, in particular an inner screw threading portion, the nut being positionable on a stud of the sanitary fitting in two positions, the stud having an outer threading, the threading matching in particular to the inner threading of the nut, wherein
- in a first position the screw threading portion is disengagablee from the outer threading of the stud and
- in a second position the screw threading portion is engagable with the outer threading of the stud.

The fastening device further comprises a locking element configured to disallow the screw threading portion of the nut to disengage from the outer threading of the stud when the nut is in the second position.

The nut can be brought from the first position to the second position by displacing the nut in a non-parallel direction with respect to the screw axis of the stud of the sanitary.

According to the present invention, the fastening device comprises a connecting element, which provides a releasable connection between the locking element and the nut and is configured such that the locking element is released from the connection when the nut is in the second position to disallow the screw threading portion of the nut to disengage from the outer threading of the stud. By providing a releasable connection between the locking element and the nut, the fastening device, when connected via the connecting element, can be a single assembly without loose parts and can thus be handled easier when mounting the sanitary fitting to the mounting object.

This enhances the ergonomics of the mounting process and provides the user mounting the sanitary fitting with greater flexibility as a single assembly without loose parts merely requires the use of one hand when fastening the fastening device to the stud of the sanitary fitting.

This allows the user to utilize the "free" hand to assist otherwise, such as holding the sanitary fitting in place on the opposite side of the mounting object or by gripping another stationary object to assist in balancing oneself in the aforementioned crouched mounting position during the mounting procedure. A fastening device consisting of separate loose parts typically requires the use of both hands when placing the fastening device over the stud.

The connecting element can be a separate piece of the fastening device, such as a bracket which is connected to the locking element and the nut by means of a form-fit and /or a frictional connection.

However, the connecting element can also be an integral part of the nut and/or the locking element, such as a structure formed on the nut and/or on the locking element. A connecting element configured as such also preferably achieves the connection between the nut and the locking element by means of a form-fit and/or a frictional connection.

By providing a nut which can be positioned on the stud of the sanitary fitting in either a non-engaged position (the first position) or an engaged position (the second position), it is possible to avoid having to screw the nut along the entire length of the stud of the sanitary fitting. Instead, with the nut in the first position, the user can simply place the fastening device onto the stud of the sanitary fitting and slide the fastening device along the screw axis to a longitudinal position on the stud substantially proximal to the mounting surface of the mounting object. Once the fastening device is in this position, the user can bring the nut into the second position and screw the nut onto the remaining length of the stud until a surface of the nut or another surface of the fastening device, such as a seal or a washer, is substantially engaged with or at least adjacent to the mounting surface of the mounting object onto which the sanitary fitting is to be mounted.

This process is advantageous versus the conventional mounting process of screwing the nut along the entire length of the stud in that it reduces the time the user requires to mount the sanitary fitting. Since the user is typically in a crouched position during the mounting procedure, as the mounting surface of the mounting object is typically the underside of a substantially waist-high sink, any substantial reduction of mounting time assists in alleviating the user's discomfort during mounting.

The screw axis of the stud can preferably be identical with the longitudinal axis of the stud, meaning it is the axis which runs lengthwise substantially through the middle of the stud.

The non-parallel direction, with respect to the screw axis of the stud of the sanitary fitting, in which the nut can be displaced can preferably be a direction substantially perpendicular to the screw axis of the stud. In some instances, however, a direction between a parallel and a perpendicular direction, with respect to the screw axis of the stud, such as a direction having a 45° angle to the screw axis of the stud of the sanitary fitting, can be advantageous.

The nut can however also be rotated from the first position to the second position about an axis. The degree of rotation about an axis to bring the nut from the first position to the second position can preferably be between 90° and 20°, in particular between 70° and 30°, in particular between 40° and 30°. The axis about which the nut can be rotated from the first position to the second position can preferably be substantially perpendicular to the screw axis of the stud. However, the axis about which the nut can be rotated from the first position to the second position can also be angled with respect to the screw axis of the stud, preferably between 10° and 35°.

The mounting procedure can be further alleviated by providing the fastening device with a locking element which disallows the screw threading portion of the nut to disengage from the outer threading of the stud when the nut is in the engaged position.

The locking element allows for the user to not have to apply a force to keep the nut in the engaged position once it has been brought into the engaged position. The locking element keeps the nut in the engaged position so that the user can simply concentrate on screwing the nut onto the remaining portion of the stud. The locking element therefore reduces the probability of the threading portion of the nut unintentionally disengaging from the outer threading of the stud.

The locking element can disallow the nut from disengaging from the second position back into the first position by restricting at least one degree of freedom of the nut, wherein the at least one degree of freedom can preferably be the degree of freedom in which the nut was brought from the first position to the second position.

It is also feasible that the nut can be brought from the first position to the second position by means of multiple degrees of freedom and the locking element can restrict one, several or all of the multiple degrees of freedom when the nut is in the second position. A rotation about one axis in either direction is considered to be one degree of freedom.

"Disallow" means to not be disengageable by conventional screwing means or by using the same type of motion of the nut utilized to bring the nut from the first position into the second, e.g. displacing the nut in a direction substantially perpendicular to the screw axis of the stud. However, the term "disallow" does not imply the nut cannot be moved by unconventional means, such as by activating an element of the fastening device to release the locking element and allow the nut to then be moved back into the first position and slid back down the stud instead of having to unscrew the nut back down along the entire length of the stud.

The screw threading portion of the nut is preferably a threading portion extending along approximately a continuous half of the inner circumference of the nut. The remaining portion of the inner circumference of the nut is preferably non-threaded, which can serve as a sliding portion, allowing the nut to be slid along the stud of the sanitary fitting while the screw threading portion of the nut is disengaged from the outer threading of the stud. The screw threading portion can however also be discontinuous, extending across several sections of the inner circumference of the nut, the several sections being interrupted from one another.

The nut can however also comprise a conventional threading extending along 360° of the entire inner circumference of the nut. In order to allow the nut having a conventional threading extending along the entire inner circumference of the nut to still be slid along the stud while in the disengaged first position, the inner diameter of the nut can be larger than the outer diameter of the stud. Alternatively, the inner circumference can have a non-circular shape, such as an oval-shape.

The nut can furthermore deviate from conventional closed-shape nuts in that the nut can be a nut segment which does not fully enclose the stud when the nut is placed on the stud. The nut segment can in particular be a 180° segment, encompassing approximately half of the stud's circumference when the nut segment is placed on the stud. This reduces the cost and weight of the fastening device in that less material is required for the nut.

Preferably, the fastening device is positionable on a stud which is hollow, in order to allow wiring for electrical components and/or water feed lines to pass through the stud.

In one embodiment, the locking element comprises a recess in which an engaging portion of the connecting element is engageable to connect the nut and the locking element, whereby the engaging portion of the connecting element disengages from the recess of the locking element when the locking element is released from the connecting element. The connection between the nut and the locking element provided thereby is simple and cost-effective. Furthermore, it is intuitive for a user to understand and apply when mounting the fastening device.

Preferably, the recess can extend along at least a portion of the circumference of an outward facing surface of the locking element. However, the recess can also extend along at least a portion of the circumference of an inward facing surface of the locking element, such as within an opening or hollow portion of the locking element. In both cases, a large engagement area between the recess and the engaging portion of the connecting element is provided to ensure a secure connection between the locking element and the nut.

The engaging portion of the connecting element can be two opposing bar-like elements or a single open or closed loop-shaped bar engaged in the recess of the locking element. In this case the engaging portion of the connecting element can be formed such that, with the recess of the locking element remaining arranged within the connecting element substantially in one plane, the engaging portion of the connecting element can disengage from the recess by a displacement of the connecting element relative to the locking element.

Alternatively, the engaging portion of the connecting element can be a flexibly displaceable snap-in-type element formed on the nut or on the locking element which engages into a recess in the locking element, respectively the nut, to form a form-fit between the locking element and the nut. A form-fit provided as such allows for an even sturdier connection, in particular with respect to unintentional disconnecting of the nut from the locking element.

As a further alternative, the engaging portion of the connecting element can be a protrusion formed on the nut or on the locking element which engages in an opening in the locking element, respectively the nut, to form a friction-fit between the locking element and the nut. The protrusion can be pin-shaped or can be a collar extending around a portion of the circumference of the nut or the locking element. These connection means can be easily manufactured, since they are preferably simple structures formed on the nut or on the locking element and can be easily integrated in a manufacturing process such as injection molding.

In one embodiment, the locking element is a washer. The washer can thereby advantageously fulfil two functions, in that it fulfils the conventional function of a washer of distributing the force effected by the nut when fastening the sanitary fitting to the mounting object, as well as provide the locking function described above. The washer can thereby comprise a guiding portion extending axially from a side of the washer facing the nut, the guiding portion providing a form-fit between the bolt and the nut when the nut is in the second position, thereby disallowing the screw threading portion of the nut from disengaging from the outer threading of the stud.

In one embodiment, the fastening device comprises a first force-increasing element for increasing the engagement force between the fastening device and the mounting object. The surface of the mounting object, on which the fastening device engages, is typically a planar surface arranged on the underside of the mounting object. This engagement surface can engage with a surface of the fastening device facing towards the engagement surface of the mounting object. Preferably, the engagement surface of the mounting object can engage with a surface of a seal of the fastening device.

Alternatively, the seal can be pre-mounted on the mounting surface of the mounting object. In any case, increasing the engagement force between the fastening device and the mounting object provides a sturdier mount of the sanitary fitting on the mounting object and also provides a better watertight seal between the sanitary fitting and the mounting object to prevent water from leaking through the opening the sanitary fitting is mounted onto.

"Increasing the engagement force" means yielding an additional engagement force beyond what is effected by merely screwing the nut onto the stud of the sanitary fitting.

By providing the user with a means to increase the engagement force other than just by screwing the nut onto the stud, the user is given more flexibility in effecting a sufficient engagement force between the fastening device and the mounting object, even if the contact surface the fasting device is pressed against is not completely flat. Creating a sufficient engagement force via the nut is often difficult, as many times this requires the use of a tool, such as a socket or a wrench, rather than merely being turned by hand. Access of such tools to the nut is, however, often limited due to space constraints in the mounting area.

The first force-increasing element is further advantageous in that it can adjust the orientation of the surface of the fastening device engaging with the engagement surface of the mounting object in order to compensate for any unevenness of the engagement surface of the mounting object.

Furthermore, turning the nut to create a high engagement force also often damages the threading of the nut and/or the threading of the stud. This can also damage the seal, if present, since turning the nut when the engagement force is high creates a large amount of shear stress on the seal, potentially damaging the seal. Using further means to increase the engagement force allows flexibility in avoiding these issues, such as by configuring the first force-increasing element such that the engaging surface of the mounting object or the fastening device engaged with the seal is only moved translatorily and is therefore not rotated, so as to prevent or at least reduce shear stress on the seal.

Alternatively the fastening device can be configured to allow the seal nut to be rotated while the seal does not rotate. This can be achieved, for instance, by providing gliding surfaces between the locking element and the nut and fixing the locking element in a non-rotatable manner, to allow the nut to rotate and glide along the surface of the locking element. This also avoids shear stress on the seal.

The first force-increasing element can preferably be a screw, but can also can be any element that can be moved linearly, either continuously or in a ratcheting fashion, i.e. from one position to the next, such as a toothed or notched stud, which can be moved by a lever.

In one embodiment, the fastening device comprises a second force-increasing element for increasing the engagement force between the screw-threading portion of the nut and the outer threading of the stud.

The second force-increasing element can be preferably be located diametrically to the first force-increasing element, in particular in that the force-increasing element and the second force-increasing element are spaced equally on one diameter. This allows for a greater ability of balancing the fastening device to compensate any unevenness of the engagement surface of the mounting object.

By providing a means to increase the engagement force between the screw-threading portion of the nut and the outer threading of the stud, a secure second position is ensured, so that the user can easily screw the nut onto the stud without having to apply lateral force to keep the nut in the second position. The second force-increasing element can be configured similar to the first force-increasing element. Alternatively, the second force-increasing element can be of a different type to allow for greater flexibility depending on the requirements placed on each force-increasing element. Furthermore, the direction in which the first force-increasing element and the second force-increasing element are actuated can preferably be the same or they can differ. The means to increase the engagement force may be adapted to additionally lock the nut in the second position.

In one embodiment, the second force-increasing element is a screw, having a screw axis substantially parallel to the screw axis of the stud of the sanitary fitting. This allows the user to easily and intuitively access the second force-increasing element, since the stud parallel to the second force-increasing element is proximate the second force-increasing element and is already accessed in any installation of a sanitary fitting.

In one embodiment, the second force-increasing element, embodied as a screw, comprises a tapered portion, which engages with the locking element to increase the engagement force between the screw threading portion of the nut and the outer threading of the stud. This allows for a simple and cost-effective means for increasing the engagement force between the screw threading portion of the nut and the outer threading of the stud.

Alternatively, the locking element can comprise a slanted wall portion extending at an angle other than parallel or perpendicular to the screw axis of the second force-increasing screw. In this case, the screw engages with the wall of the locking element and thereby increases the engagement force between the screw-threading portion of the nut and the outer threading of the stud.

The aforementioned object is further achieved by providing a sanitary fitting, comprising:
a) a fitting body;
b) a hot water inlet and/or a cold water inlet for introducing water into the sanitary fitting;
c) a water outlet for dispensing water from the sanitary fitting;
d) a stud connected to the fitting body; and
e) a fastening device according to the description above.

### BRIEF DESCRIPTION OF THE DRAWINGS

In the following, various embodiments comprising a locking element, a nut and a connecting element are depicted.
- Figure 1: shows a sectional view of a first embodiment of a fastening device according to the invention on a stud, the nut of the fastening device being in the first position;
- Figure 2: shows a sectional view of the nut of the fastening device of figure 1;
- Figure 3: shows a perspective view of the nut of the fastening device of figures 1 and 2;
- Figure 4: shows a perspective view of the connecting element of the fastening device of figure 1;
- Figure 5: shows a perspective view of the locking element of the fastening device of figure 1;
- Figure 6: shows a sectional view of the fastening device of figure 1, the nut of the fastening device being in a second position;
- Figure 7: shows a sectional view of a second embodiment of a fastening device comprising a nut, a locking element and connecting element according to the invention on a stud, the nut of the fastening device being in the first position;
- Figure 8: shows a bottom view of the fastening device of figure 7;
- Figure 9: shows a perspective view of the nut of the fastening device of figures 7 and 8;
- Figure 10: shows a perspective view of the locking element of the fastening device of figures 7 and 8;
- Figure 11: shows a sectional view of the fastening device of figures 7 and 8, the nut of the fastening device being in the second position; and
- Figure 12: shows a sanitary fitting mounted to a mounting object by means of the fastening device of figures 1, 6, 7 and 11 according to the invention.

### DETAILED DESCRIPTION OF PREFERRED EMBODIMENTS

### 1. First embodiment

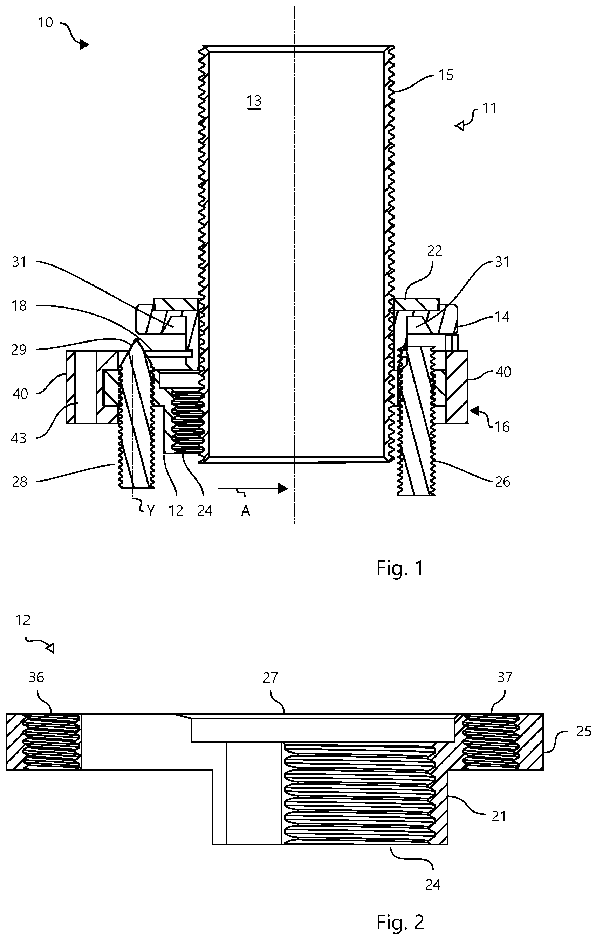

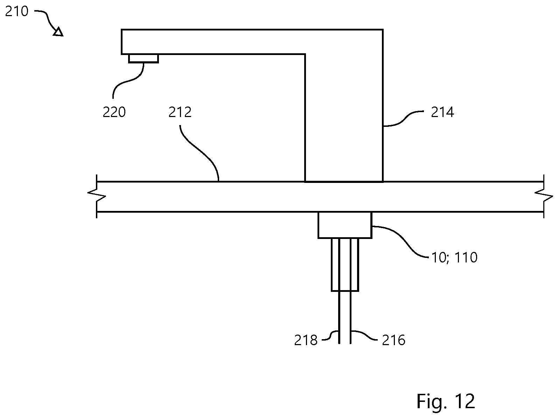

Figure 1 shows a first embodiment of a fastening device 10 for mounting a sanitary fitting to a mounting object, such as a sink or a countertop. The fastening device 10 is placed on a stud 11 having a hollow section 13 and an outer threading 15 on its outer surface. The hollow section 13 is arranged along a longitudinal axis x of the stud 11 and is adapted to receive wiring and/or water feed lines, for example. The stud 11 has a general cylindrical shape and is typically pre-installed on the sanitary fitting which is to be mounted to the mounting object, as shown in figure 12 and described below.

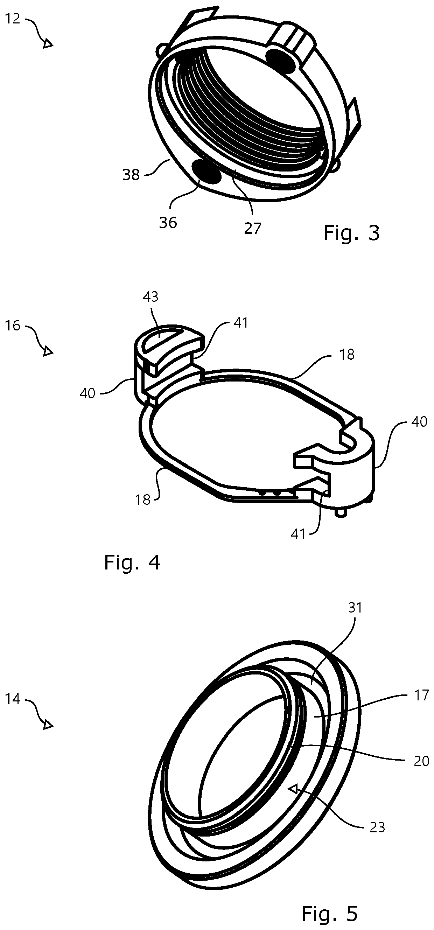

The fastening device 10 comprises a nut 12, a locking element 14 and a connecting element 16, which connects the nut 12 with the locking element 14 in figure 1. In the embodiment of figure 1, the connecting element 16 is a separately manufactured piece of the fastening device 10, embodied as a bracket which connects the locking element 14 and the nut 12. The nut 12 is shown in figures 2 and 3 in greater detail. Details of the connecting element 16 and of the locking element 14 of the first embodiment are shown in figures 4 and 5.

The nut 12 comprises a screw body 21 and a main body 25, both bodies 21 and 25 being integrally connected to one another. They can however also be separate, non-integral pieces connected to one another, for instance by means of an adhesive connection.

The main body 25 of the nut 12 fulfils the function of providing means to receive a first force-increasing element 26 and a second force-increasing element 28, both embodied as screws in the first embodiment of figures 1 to 6, having threading on their outer circumferences. The means for receiving a first force-increasing element 26 and a second force-increasing element 28 comprise two threaded openings 36, 37, into which the first force-increasing element 26 and the second force-increasing element 28 are screwed respectively, engaging with the outer threadings of the first force-increasing element 26 and of a second force-increasing element 28.

The main body 25 further comprises two opposing outward facing surfaces 80, 82 and sections 38, which flare radially out from the main body 25 in a direction perpendicular to the screw axis x and are received by the connecting element 16, thereby providing means for a connection of the nut 12 and the connecting element 16.

The screw body 21 of the nut 12 extends approximately by 180° along a circle and comprises a screw threading portion 24 extending substantially along the inner circumference of the screw body 21 of the nut 12. It can however be advantageous to allow the screw body 21 to extend slightly beyond 180°, preferably between 200° and 240°, and limit the screw threading portion 24 to just a portion of the inner circumference of the screw body 21, such as 180°. In this case, it is advantageous to provide the non-threaded portion of the inner circumference of the screw body 21 with an inner diameter which is larger than the inner diameter of the screw threading portion 24.

The screw body 21 further comprises a collar portion 27 adjacent to the screw threading portion 24 along the axis x, the function of the collar portion 27 being described further below.

Figure 4 shows the connecting element 16, formed as a bracket, to provide a connection between the nut 12 and the locking element 14. The connecting element 16 comprises an engaging portion 18 and two receiving elements 40 having slots 41, which receive the flared sections 38 of the nut 12, as described above, to form a connection between the connecting element 16 and the nut 12. The connecting element 16 further comprises a hollow section 43 in one of the receiving elements 40.

The locking element 14 comprises a seal 22, which provides a substantially water tight sealing between the fastening device 10 and a mounting surface of the mounting object the sanitary fitting is to be mounted to. The seal 22 can be attached to the locking element 14 by means of a press-fit, or preferably by means of a cohesive connection, such as by gluing the seal 22 to the locking element 14. Other means of cohesive connections are also possible, such as by melting the seal 22 to the locking element 14. The seal 22 or the connection of the seal 22 to the locking element 14 can also be adapted to allow the seal 22 to move relatively to the locking element 14 during the mounting process of the sanitary fitting, to provide a better seal and to reduce shear stress on the seal 22.

The locking element 14 further comprises a guiding portion 23 having an outward facing surface 17, best seen in figure 5. The guiding portion 23 is substantially of a hollow cylindrical form, of which the inner diameter is substantially equal to the outer diameter of the outer threading 15 of the stud 11. The locking element 14 is thereby guidable along the length of the stud 11 by means of the guiding portion 23.

The locking element 14 also comprises a recess 20 extending around the circumference of the outward facing surface 17 of the guiding portion 23 of the locking element 14.

The connection between the nut 12 and the locking element 14 via the connecting element 16 is achieved by means of the engaging portion 18 of the connecting element 16, engaging in the recess 20 of the locking element 14.

In the first embodiment of figure 1, the locking element 14 is also used as a washer to distribute the force affected by the nut 12 when fastening the sanitary fitting to the mounting object. The washer can however also be a separate element not integrated in the locking element 14.

The first force-increasing element 26 serves the purpose of increasing the engagement force between the fastening device 10 and the mounting surface of the mounting object the sanitary fitting is mounted to. The mounting surface of the mounting object is in most cases arranged on the underside of a sink or countertop, wherein the mounting surface engages with a surface of the seal 22 facing towards the mounting object.

The second force-increasing element 28, having a tapered portion 29 engageable with an engaging portion 31 of the locking element 14, serves the purpose of increasing the engagement force between the screw threading portion of the nut 12 and the outer threading 15 of the stud 11 of the sanitary fitting.

The fastening process is initiated by placing the fastening device 10 over the stud 11. The fastening device 10 is guided along the stud 11 by the guiding portion 23 of the locking element 14, as the inner diameter of the guiding portion 23 is substantially equal to the outer diameter of the outer threading 15 of the stud 11, such that the fastening device 10 can be moved along the length of the stud 11 with enough degree of freedom to prevent any jamming of the fastening device 10 on the outer threading 15 of the stud 11.

Because the locking element 14 guides the fastening device 10 along the stud 11, the screw-threading portion 24 of the nut 12 is prevented from engaging in the outer threading 15 of the stud 11. In this first position of the nut 12, the fastening device 10 can be slid along the length of the stud 11 until the fastening device 10 is proximate to the mounting surface of the mounting object. The typically tedious procedure of screwing the nut along the entire length of the stud 11 is thereby avoided.

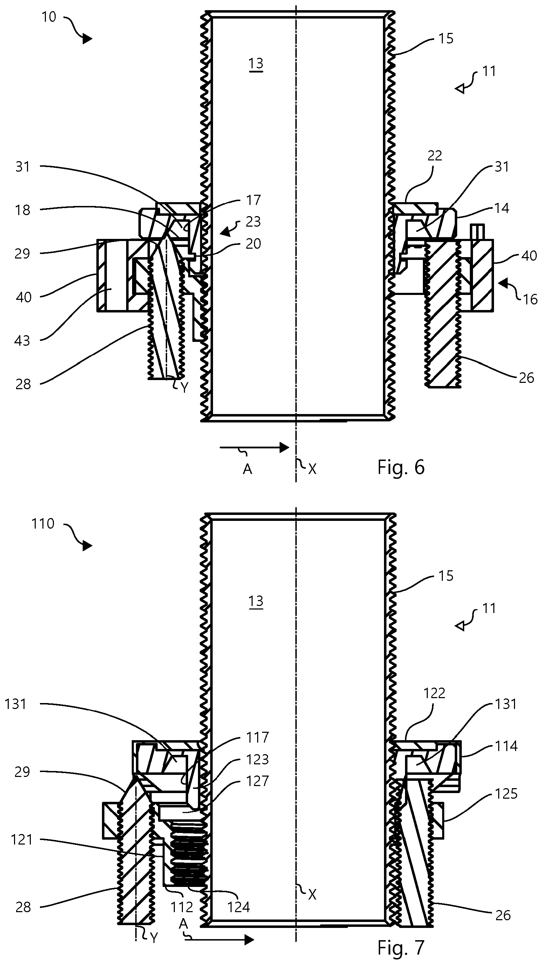

Once the fastening device 10 is proximate the mounting surface of the mounting object the nut can be brought into the second position, i.e. the engaged position shown in figure 6. In order to bring the nut 12 from the first position to the second position, the nut is displaced in the direction A, which is substantially perpendicular to the screw axis x of the stud 11 of the sanitary fitting. By displacing the nut 12 in such a fashion, the screw threading portion 24 engages with the outer threading 15 of the stud 11. Because the locking element 14 is guided by the outer threading 15 of the stud 11, any substantial movement of the locking element 14 perpendicular to the screw axis x of the stud 11 is prevented.

Therefore, when the nut 12 is displaced from the first position to the second position, the engaging portion 18 of the connecting element 16 is released from the recess 20 of the locking element 14, and thus the locking element 14 is released from the connecting element 16. The locking element 14 drops substantially vertically towards the tapered portion 29 of the second force-increasing element 28. In this position, the tapered portion 29 of the second force-increasing element 28 engages in the engaging portion 31 of the locking element 14.

Because the inner diameter of the guiding portion 23 of the locking element 14 is substantially equal to the outer diameter of the outer threading 15 of the stud 11 and the tapered portion 29 of the second force-increasing element 28 is engaged in the engaging portion 31 of the locking element 14, the screw threading portion 24 of the nut 12 is disallowed from disengaging from the outer threading 15 of the stud 11, thereby keeping the nut 12 in the second position.

In this second position the fastening device 10 can be screwed along the stud 11 until the fastening device 10 is most proximate the mounting surface of the mounting object or the force exerted by the fastening device 10 upon the mounting surface is sufficient.

While in the embodiment of figures 1 to 6 described hitherto the second force-increasing element 28 is necessary to provide the locking function of the locking element 14, alternatively it is also possible to omit the at least the second force-increasing element 28. In this case, the function of preventing the nut 12 from returning into the first position can also be achieved by any structure protruding from the connecting element 16 or from the nut 12 or the locking element 14 and engaging with a corresponding engaging portion in the connecting element 16, the nut 12 or the locking element 14 respectively, such as the engaging portion 31 of the locking element 14.

Furthermore, the locking function can also be achieved by dimensioning the inner diameter of the nut 12, such that when the locking element 14 is released form the connecting element 16 and drops substantially vertically, the guiding portion 23 or a similar engaging structure dips into a portion of the main body 25 of the nut 12, thereby jamming the nut 12 in the second position by reducing the degree of freedom of the nut 12 in a direction perpendicular to the axis x and thereby disallowing the screw threading portion 24 of the nut 12 from disengaging from the outer threading 15 of the stud 11.

The engagement force between the threading of the nut 12 and the outer threading 15 of the stud 11 can then be increased by means of the second force-increasing element 28, by screwing the second force-increasing element 28 farther into the threaded openings 36, 37 of the nut 12, such that the tapered portion 29 of the second force-increasing element 28 engages farther into the engaging portion 31 of the locking element 14, thereby further displacing the screw threading portion 24 of the nut 12 toward the outer threading 15 of the stud 11.

To further increase the engagement force between the fastening device 10 and the mounting surface of the mounting object, the first force-increasing element 26 can be screwed into the connecting element 16, thereby engaging the locking element 14 and displacing the locking element 14 farther toward the mounting surface of the mounting object. This allows for a more effective seal between the seal 22 and the mounting surface of the mounting object.

Figure 6 shows the fastening device 10 of figure 1 placed on the stud 11. The nut 12 is thereby in the second position, wherein the screw threading portion 24 of the nut 12 is engaged with the outer threading 15 of the stud 11.

### 2. Second embodiment

The second embodiment of a fastening device 110 is shown in figures 7 to 11. The elements featuring characteristics equal or similar to those of the first embodiment are referenced by the reference numerals of figures 1 to 6 plus 100 each.

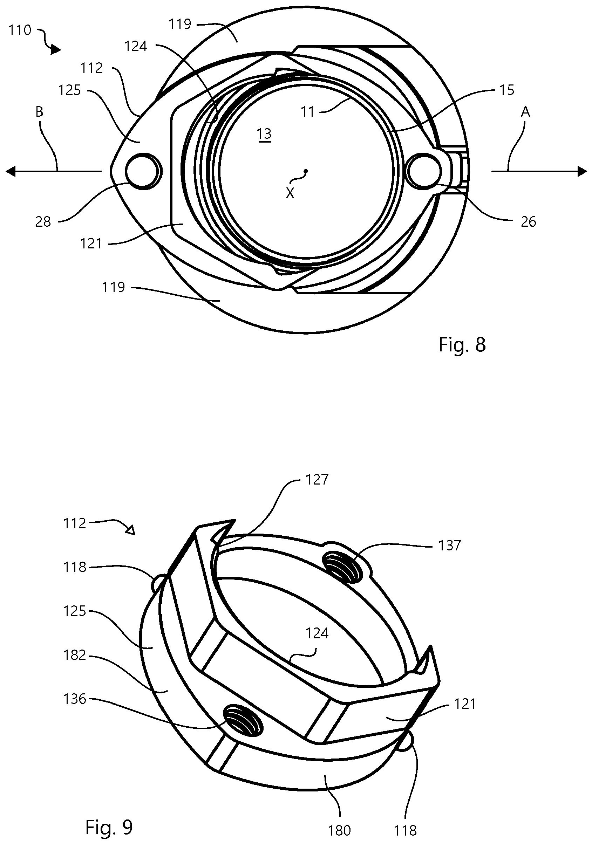

The fastening device 110 of figures 7 and 8 is placed on a stud 11 having a hollow section 13 and an outer threading 15, as in the first embodiment of figures 1 and 6.

The fastening device 110 comprises a nut 112, along with a first force-increasing element 26 and a second force-increasing element 28 of figures 1 and 6. The fastening device 110 further comprises a locking element 114.

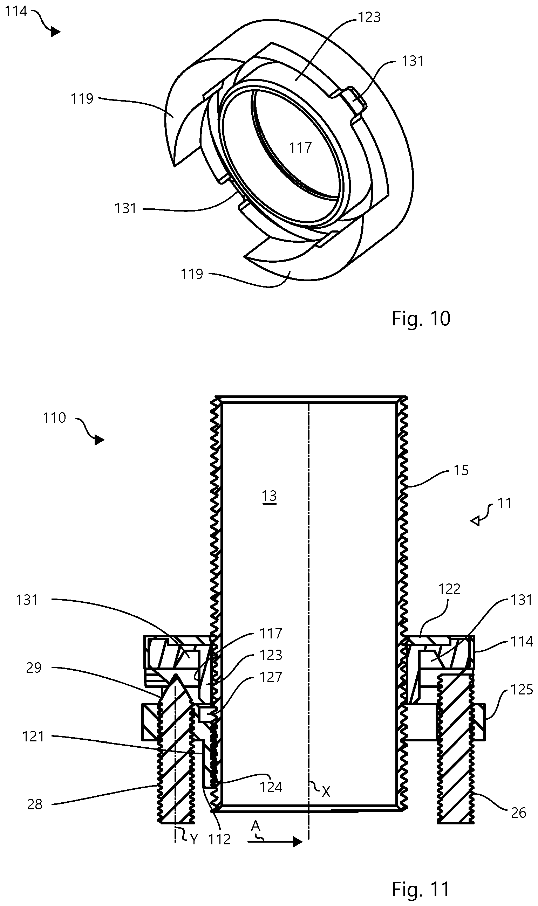

Figure 9 shows the nut 112 and figure 10 shows the locking element 114 in detail.

The nut 112 comprises a screw body 121 having a screw threading portion 124 and a main body 125, both bodies 121 and 125 being connected. The screw body 121 comprises a collar portion 127 adjacent to the screw threading portion 124 with respect to the screw axis x. The main body 125 comprises two opposing outward facing surfaces 180, 182, wherein each opposing outward facing surface 180, 182 has an engaging portion 118 embodied as protrusions each formed on one of the respective surfaces 180, 182.

The locking element 114 comprises a guiding portion 123 and gripping portions 119, which are formed on the locking element 114 as integral parts of the locking element 114.

The guiding portion 123 is substantially of hollow cylindrical form, of which the inner diameter is substantially equal to the outer diameter of the outer threading 15 of the stud 11. The locking element 114 is thereby guidable along the length of the stud 11 by means of the guiding portion 123.

In figures 7 and 8 the nut 112 is in the first position, in which the screw threading portion 124 is disengaged from the outer threading 15 of the stud 11. In this position, the gripping portions 119 of the locking element 114 form a form-fit and a friction-fit with a portion of the opposing outward facing surfaces 180, 182 of the main body 125 of the nut 112. The gripping portions 119 can therefore preferably be flexible and deflectable, so as to allow an easier reception of the nut 112 by the gripping portions 119.

More specifically, as best seen in figure 8, the nut 112 is friction-fitted with the locking element 114 in the direction A. The nut 112 is also form-fitted with the locking element 114 in a direction B, which is opposite of the direction A. This means that the nut 112 is geometrically constrained from moving farther in the direction B relative to the locking element 114, while the friction-fit can be overcome by applying a force greater than the frictional force between the locking element 114 and the main body 125 of the nut 112 in the direction A.

Furthermore, the friction-fit is enhanced in that the engaging portions 118 embodied as protrusions on the two opposing outward facing surfaces 180, 182 of the nut 112 can be inserted in corresponding recesses (not displayed in the figures showing the second embodiment) on the inner circumference of the locking element 114 when the nut 112 is in the first position.

The protrusions 118 can preferably be dimensioned small enough, so that the protrusions 118 can easily be removed from the corresponding recesses in the nut 112 by applying the abovementioned force in the direction A, in order to bring the nut 112 from the first position into the second position. The protrusions 118 inserted into the corresponding recesses in the locking element 114 therefore resemble a press-fit, and therefore a friction-fit.

The friction force between the locking element 114 and the main body 125 of the nut 112 needs to be overcome by the user in order to bring the nut 112 from the first position, in which the screw threading portion 124 is disengaged from the outer threading 15 of the stud 11, into the second position, in which the screw threading portion 124 is engaged with the outer threading 15 of the stud 11, via the direction A. As the nut 112 is moved in the direction A relative to the locking element 114, the friction-fit between the two parts is released.

The locking element 114 is allowed to move vertically or at least in a direction which vectorially comprises a vertical component. At least a part of the guiding portion 123 of the locking element 114 thereby dips into the collar portion 127 of the nut 112 and thereby forms a form-fit with the collar portion 127 of the nut 112.

Therefore, when the nut 112 is brought into the second position, wherein the screw threading portion 124 is engaged with the outer threading 15 of the stud 11, and the form-fit between the guiding portion 123 and the collar portion 127 of the screw body 121 of the nut 112 is formed, the screw threading portion 124 is disallowed from disengaging from the outer threading 15 of the stud 11 by means of the locking element 114.

In the second embodiment of the invention the engaging portions 118 formed on the nut 112 are disengaged from the recess formed in the locking element 114 by displacing the nut 112, and thereby also the engaging portions 118, in a direction substantially perpendicular (90°) to the insertion direction of the engaging portions 118. However, it is also feasible to disengage the engaging portions 118 from the recess in a 180° direction with respect to the insertion direction. In this case, the engaging portions 118 and the corresponding recesses would be formed on surfaces facing towards directions A and B respectively.

The second embodiment differs from the first embodiment essentially in that the locking element 114 and the nut 112 are not connected indirectly by means of a separate connecting element, but rather they are connected directly to one another by means of gripping portions 119 formed on the locking element 114 as integral parts of the locking element 114, and by means of the protrusions 118 formed on the nut 112 as integral parts of the nut 112.

The first force-increasing element 26 and a second force-increasing element 28 function in the same manner to increase the engagement force between the threading of the nut 112 and the outer threading 15 of the stud 11 and to increase the engagement force between the fastening device 110 and the mounting surface of the mounting object as described regarding the first embodiment of figures 1 to 6.

Figure 11 shows the nut 112 in the above described second position, in which the screw threading portion 124 is engaged with the outer threading 15 of the stud 11.

Figure 12 shows a sanitary fitting 210 mounted to a mounting object 212 by means of the fastening device 10, 110 according to the first or second embodiment, as described above, The sanitary fitting 210 comprises a fitting body 214, hot water inlet 216, a cold water inlet 218 and a water outlet 220. A hollow cylindrical stud 11 having an outer threading is attached to the fitting body 214 of the sanitary fitting 210.

The fastening device 10, 110 is screwed onto the outer threading of the stud 11.

## Claims

1. A fastening device (10; 110) for fastening a sanitary fitting to a mounting object, comprising:
a) a nut (12; 112) having a screw threading portion (24; 124), the nut being positionable on a stud (11) of the sanitary fitting in two positions, the stud having an outer threading (15), wherein
- in a first position the screw threading portion (24; 124) is disengagable from the outer threading (15) of the stud (11) and
- in a second position the screw threading portion (24; 124) is engagable with the outer threading (15) of the stud (11),
and
b) a locking element (14; 114) configured to disallow the screw threading portion (24; 124) of the nut (12; 112) to disengage from the outer threading (15) of the stud (11) when the nut (12; 112) is in the second position;
wherein
c) the nut (12; 112) can be brought from the first position to the second position by displacing the nut (12; 112) in a non-parallel direction A with respect to the screw axis x of the stud (11) of the sanitary fitting;
**characterized in that**
d) the fastening device (10; 110) comprises a connecting element (16; 118, 119) which provides a releasable connection between the locking element (14; 114) and the nut (12; 112) and is configured such that the locking element (14; 114) is released from the connection when the nut (12; 112) is in the second position to disallow the screw threading portion (24; 124) of the nut (12; 112) to disengage from the outer threading (15) of the stud (11).

2. The fastening device (10; 110) according to claim 1, wherein the locking element (14; 114) comprises a recess (20) in which an engaging portion (18; 118) of the connecting element (16; 118) is engageable to connect the nut (12; 112) and the locking element (14; 114), whereby the engaging portion (18; 118) of the connecting element (16; 118) disengages from the recess (20) of the locking element (14; 114) when the locking element (14; 114) is released from the connecting element (16; 118).

3. The fastening device (10; 110) according to one of the preceding claims, wherein the locking element (14; 114) is a washer.

4. The fastening device (10; 110) according to any one of preceding claims, wherein the fastening device (10; 110) comprises a first force-increasing element (26) for increasing the engagement force between the fastening device (10; 110) and the mounting object.

5. The fastening device (10; 110) according to any one of the preceding claims, wherein the fastening device (10; 110) comprises a second force-increasing (28) element for increasing the engagement force between the screw threading portion (24; 124) of the nut (12; 112) and the outer threading (15) of the stud (11).

6. The fastening device (10; 110) according to claim 5, wherein the second force-increasing element (28) is a screw having a screw axis y substantially parallel to the screw axis x of the stud (11) of the sanitary fitting.

7. The fastening device (10; 110) according to claim 6, wherein the screw (28) comprises a tapered portion (29) which engages with the locking element (14; 114) to increase the engagement force between the screw threading portion (24; 124) of the nut (12; 112) and the outer threading (15) of the stud (11).

8. A sanitary fitting (210), comprising:
a) a fitting body (214);
b) a hot water inlet (216) and/or a cold water (218) inlet for introducing water into the sanitary fitting (210);
c) a water outlet (220) for dispensing water from the sanitary fitting (210);
d) a stud (11) connected to the fitting body (214); and
e) a fastening device (10; 110) according to any one of claims 1 to 7.

## Patentansprüche

1. Befestigungsvorrichtung (10; 110) zum Befestigen einer Sanitärarmatur an einem Montagegegenstand, umfassend:
a) eine Mutter (12; 112) mit einem Schraubgewindeabschnitt (24; 124), wobei die Mutter in zwei Positionen auf einer Stange (11) der Sanitärarmatur positionierbar ist, wobei die Stange ein Außengewinde (15) aufweist, wobei
- in einer ersten Position der Schraubgewindeabschnitt (24; 124) von dem Außengewinde (15) der Stange (11) lösbar ist und
- in einer zweiten Position der Schraubgewindeabschnitt (24; 124) mit dem Außengewinde (15) der Stange (11) in Eingriff bringbar ist,
und
b) ein Verriegelungselement (14; 114), das so eingerichtet ist, dass es verhindert, dass sich der Schraubgewindeabschnitt (24; 124) der Mutter (12; 112) von dem Außengewinde (15) der Stange (11) löst, wenn sich die Mutter (12; 112) in der zweiten Position befindet;
wobei
c) die Mutter (12; 112) von der ersten Position in die zweite Position gebracht werden kann, indem die Mutter (12; 112) in einer nicht-parallelen Richtung A in Bezug auf die Schraubenachse x der Stange (11) der Sanitärarmatur verschoben wird
**dadurch gekennzeichnet, dass**
d) die Befestigungsvorrichtung (10; 110) ein Verbindungselement (16; 118, 119) umfasst, das eine lösbare Verbindung zwischen dem Verriegelungselement (14; 114) und der Mutter (12; 112) bereitstellt und so eingerichtet ist, dass das Verriegelungselement (14; 114) aus der Verbindung gelöst wird, wenn sich die Mutter (12; 112) in der zweiten Position befindet, um zu verhindern, dass der Schraubengewindeabschnitt (24; 124) der Mutter (12; 112) außer Eingriff mit dem Außengewinde (15) der Stange (11) kommt.

2. Befestigungsvorrichtung (10; 110) nach Anspruch 1, wobei das Verriegelungselement (14; 114) eine Aussparung (20) aufweist, in die ein Eingriffsabschnitt (18; 118) des Verbindungselements (16; 118) eingreifen kann, um die Mutter (12; 112) und das Verriegelungselement (14; 114) zu verbinden, wodurch der Eingriffsabschnitt (18; 118) des Verbindungselements (16; 118) aus der Aussparung (20) des Verriegelungselements (14; 114) ausrückt, wenn das Verriegelungselement (14; 114) von dem Verbindungselement (16; 118) gelöst wird.

3. Befestigungsvorrichtung (10; 110) nach einem der vorstehenden Ansprüche, wobei das Verriegelungselement (14; 114) eine Unterlegscheibe ist.

4. Befestigungsvorrichtung (10; 110) nach einem der vorhergehenden Ansprüche, wobei die Befestigungsvorrichtung (10; 110) ein erstes kraftverstärkendes Element (26) zur Erhöhung der Klemmkraft zwischen der Befestigungsvorrichtung (10; 110) und dem Montagegegenstand umfasst.

5. Befestigungsvorrichtung (10; 110) nach einem der vorstehenden Ansprüche, wobei die Befestigungsvorrichtung (10; 110) ein zweites kraftverstärkendes (28) Element zum Erhöhen der Klemmkraft zwischen dem Schraubgewindeabschnitt (24; 124) der Mutter (12; 112) und dem Außengewinde (15) der Stange (11) aufweist.

6. Befestigungsvorrichtung (10; 110) nach Anspruch 5, wobei das zweite kraftverstärkende Element (28) eine Schraube mit einer Schraubenachse y ist, die im Wesentlichen parallel zur Schraubenachse x der Stange (11) der Sanitärarmatur verläuft.

7. Befestigungsvorrichtung (10; 110) nach Anspruch 6, wobei die Schraube (28) einen sich verjüngenden Abschnitt (29) aufweist, der mit dem Verriegelungselement (14; 114) in Eingriff steht, um die Klemmkraft zwischen dem Schraubengewindeabschnitt (24; 124) der Mutter (12; 112) und dem Außengewinde (15) der Stange (11) zu erhöhen.

8. Sanitärarmatur (210), umfassend:
a) einen Armaturenkörper (214);
b) einen Warmwassereinlass (216) und/oder einen Kaltwassereinlass (218) zum Einleiten von Wasser in die Sanitärarmatur (210);
c) einen Wasserauslass (220) zur Abgabe von Wasser aus der Sanitärarmatur (210);
d) eine Stange (11), der mit dem Armaturenkörper (214) verbunden ist; und
e) eine Befestigungsvorrichtung (10; 110) nach einem der Ansprüche 1 bis 7.

## Revendications

1. Dispositif de fixation (10 ; 110) pour la fixation d'un raccord sanitaire à un objet de montage, comprenant :
a) un écrou (12 ; 112) ayant une portion de filetage vissé (24 ; 124), l'écrou pouvant être positionné sur un goujon (11) du raccord sanitaire dans deux positions, le goujon ayant un filetage externe (15), dans lequel
- dans une première position, la portion de filetage vissé (24 ; 124) peut être désengagée du filetage externe (15) du goujon (11) et
- dans une seconde position, la portion de filetage vissé (24 ; 124) peut être engagée avec le filetage externe (15) du goujon (11),
et
b) un élément de verrouillage (14 ; 114) configuré pour empêcher la portion de filetage vissé (24; 124) de l'écrou (12; 112) de se désengager du filetage externe (15) du goujon (11) lorsque l'écrou (12 ; 112) est dans la seconde position ;
dans lequel
c) l'écrou (12 ; 112) peut être amené de la première position à la seconde position en déplaçant l'écrou (12 ; 112) dans une direction non parallèle A par rapport à l'axe de vis x du goujon (11) du raccord sanitaire ;
**caractérisé en ce que**
d) le dispositif de fixation (10 ; 110) comprend un élément de connexion (16 ; 118, 119) qui fournit une connexion pouvant être libérée entre l'élément de verrouillage (14 ; 114) et l'écrou (12 ; 112), et est configuré de sorte que l'élément de verrouillage (14 ; 114) est libéré de la connexion lorsque l'écrou (12 ; 112) est dans la seconde position pour empêcher la portion de filetage vissé (24 ; 124) de l'écrou (12 ; 112) de se désengager du filetage externe (15) du goujon (11).

2. Dispositif de fixation (10 ; 110) selon la revendication 1, dans lequel l'élément de verrouillage (14; 114) comprend un retrait (20) dans lequel une portion d'engagement (18 ; 118) de l'élément de connexion (16 ; 118) peut être engagée pour connecter l'écrou (12 ; 112) et l'élément de verrouillage (14 ; 114), moyennant quoi la portion d'engagement (18 ; 118) de l'élément de connexion (16 ; 118) se désengage du retrait (20) de l'élément de verrouillage (14 ; 114) lorsque l'élément de verrouillage (14 ; 114) est libéré de l'élément de connexion (16; 118).

3. Dispositif de fixation (10 ; 110) selon une des revendications précédentes, dans lequel l'élément de verrouillage (14 ; 114) est une rondelle.

4. Dispositif de fixation (10; 110) selon l'une quelconque des revendications précédentes, dans lequel le dispositif de fixation (10 ; 110) comprend un premier élément d'augmentation de force (26) pour augmenter la force d'engagement entre le dispositif de fixation (10 ; 110) et l'objet de montage.

5. Dispositif de fixation (10; 110) selon l'une quelconque des revendications précédentes, dans lequel le dispositif de fixation (10 ; 110) comprend un second élément d'augmentation de force (28) pour augmenter la force d'engagement entre la portion de filetage vissé (24 ; 124) de l'écrou (12 ; 112) et le filetage externe (15) du goujon (11).

6. Dispositif de fixation (10 ; 110) selon la revendication 5, dans lequel le second élément d'augmentation de force (28) est une vis ayant un axe de vis y essentiellement parallèle à l'axe de vis x du goujon (11) du raccord sanitaire.

7. Dispositif de fixation (10 ; 110) selon la revendication 6, dans lequel la vis (28) comprend une portion effilée (29) qui s'engage avec l'élément de verrouillage (14 ; 114) pour augmenter la force d'engagement entre la portion de filetage vissé (24 ; 124) de l'écrou (12 ; 112) et le filetage externe (15) du goujon (11).

8. Raccord sanitaire (210), comprenant :
a) un corps de raccord (214) ;
b) une entrée d'eau chaude (216) et/ou une entrée d'eau froide (218) pour introduire de l'eau dans le raccord sanitaire (210) ;
c) une sortie d'eau (220) pour distribuer de l'eau depuis le raccord sanitaire (210) ;
d) un goujon (11) connecté au corps de raccord (214) ; et
e) un dispositif de fixation (10 ; 110) selon l'une quelconque des revendications 1 à 7.
